# FASCICULE DE BREVET EUROPEEN

(11) **EP 1 731 861 B1**
(45) Date de publication et mention de la délivrance du brevet: **08.10.2008**
(21) Numéro de dépôt: 06300534.2
(22) Date de dépôt: 30.05.2006
(51) Int. Cl.: F25D 29/00, A23L 3/375

(54) **Procédé de refroidissement cryogénique d'une poudre**
Method for cryogenic refrigeration of a powder
Verfahren zur kryogenen Abkühlung eines Pulvers

(30) Priorité: 09.06.2005 FR 0551552
(43) Date de publication de la demande: 13.12.2006
(73) Titulaire: L'AIR LIQUIDE, Société Anonyme pour l'Etude et l'Exploitation des Procédés Georges Claude, 75007 Paris (FR)
(72) Inventeur: Taylor, Robert, 1300, WAVRE (BE); Bruggeman, Beny, 9032, GENT-WONDELGEM (BE)
(74) Mandataire: Mellul-Bendelac, Sylvie Lisette

(56) Documents cités:
- EP-A- 0 987 506
- FR-A- 2 853 403
- US-A- 3 889 488
- US-A- 5 454 232
- US-A- 5 813 237

## Description

La présente invention concerne le domaine des procédés et installations de traitement cryogénique de produits, notamment alimentaires ou chimiques, les traitements visés étant en particulier les traitements de refroidissement ou encore surgélation. Elle s'intéresse en particulier aux traitements de refroidissement de certaines poudres très fines, refroidissement destiné à stabiliser la structure cristalline obtenue en sortie du procédé d'élaboration des poudres qui est situé en amont.

Le refroidissement cryogénique de poudres très fines (typiquement 10 µm à 2 ou 3 mm) se pose typiquement dans le cas de poudres à haute teneur en matière grasse (intervenant par exemple dans les soupes, produits laitiers, sauces, préparations à base de chocolat etc...), ou encore dans certaines applications chimiques telles les poudres détergentes.

En général, le procédé amont de fabrication de telles poudres délivre des poudres dont la température est relativement élevée, couramment de +25°C à +50°C, températures où la composition en matière grasse est à l'état liquide ou semi-liquide/semi-cristallisé.

Dans ces conditions, il est nécessaire d'effectuer un refroidissement pour cristalliser les matières grasses et stabiliser ainsi la structure de la poudre.

On préfère effectuer une telle cristallisation dans un arrangement où les particules de poudre sont en mouvement, ceci pour éviter que des phénomènes d'agrégation se produisent.

Selon les travaux effectués par la Demanderesse, les tunnels de refroidissement dits « à support vibrants » peuvent représenter une solution intéressante aux problématiques techniques listées ci-dessus.

La Demanderesse avait déjà proposé dans le document EP-A-505 222 un nouveau concept de procédé de congélation de produits alimentaires, selon lequel on met en contact le produit avec une surface réfrigérante, qui résulte de l'utilisation d'un support vibrant et d'un gaz liquéfié, la surface réfrigérante étant constituée d'un film de gaz liquéfié disposé sur le support.

Selon ce procédé antérieur, les produits, même très collants, n'adhèrent aucunement au support, ceci malgré une épaisseur du film qui peut être très faible, on estime en fait que selon toute vraisemblance le produit ainsi traité flotte à la surface du film de gaz liquéfié par un phénomène de caléfaction, et se retourne régulièrement dans ce film, obviant ainsi tout risque d'adhésion sur le support. Typiquement, ce type de système fonctionne ainsi : on injecte une quantité importante d'azote liquide dans le bac, qui est par exemple en configuration de pente légèrement montante. Le trop plein de liquide sort de l'appareil avec les produits. L'azote est alors séparé des produits par une grille située en sortie de dispositif. L'azote ainsi récupéré est recyclé : il est collecté dans une réserve puis pompé par une pompe à piston et repart dans le bac de traitement.

Le niveau d'azote est maintenu sensiblement constant dans la réserve grâce à une vanne pilotée par une sonde qui en mesure le niveau d'azote liquide.

Ainsi l'azote circule en circuit semi fermé , il ne sort du circuit que par évaporation au contact des produits, cette sortie d'azote est compensée en permanence par l'alimentation de la réserve. Les produits ne font qu'un seul passage dans le bac.

Il faut souligner que si ce système antérieur présente de nombreux avantages, il présente pour certains produits des inconvénients, essentiellement liés à la présence de la pompe :
- qui représente l'élément sensible du système : pompe qui consomme une quantité non négligeable d'air comprimé, et qui quand le débit des produits à traiter est très important, limite la capacité de refroidissement globale du système par sa capacité de pompage.
- par ailleurs le système pose des problèmes pour les produits de petite taille et les poudres : en effet la taille du produit peut devenir inférieure à la taille des orifices de la grille, et circuler ainsi en circuit fermé avec l'azote, ce qui, on le conçoit, n'est pas satisfaisant du point de vue sanitaire et peut mener à des accumulations ou bouchages. De plus, ces systèmes antérieurs mettant en oeuvre un film de liquide cryogénique vont représenter pour de telles poudres un traitement trop long, en d'autres termes trop froid.

Et pourtant un contrôle extrêmement précis de la température des poudres est un point essentiel de la réussite de tels procédés :
- ainsi, si les poudres sont sous-refroidies, elles vont compléter leur processus de cristallisation durant leur stockage ultérieur, sans qu'elle ne soient plus soumises à aucun mouvement, d'où le risque de voir se former des amas, voire même une masse carrément frittée ;
- en revanche, si les poudres sont sur-refroidies (en tout cas au delà de la température nécessaire), d'une part ceci représente une consommation énergétique superflue, mais d'autre part, les poudres peuvent être en situation de condenser de la vapeur d'eau se trouvant dans l'atmosphère environnante, ce qui va représenter un élément indésirable pour le produit final.

On le voit donc on contrôle très précis est nécessaire, et l'on conçoit qu'un tel contrôle aussi précis de la température des poudres se révèle une tâche très compliquée, quand on sait que les débits de produits à l'entrée du système peuvent varier largement en fonction de ce qui se déroule en amont sur la chaîne, sans oublier la température des poudres entrantes qui là encore peut varier sensiblement.

Un autre exemple de refroidissement de produits dans un tunnel muni d'un support vibrant est montré dans le document FR-A-2 853 403.

Comme on va le voir ci-dessous, la présente invention propose alors une version améliorée des systèmes à support vibrant de l'art antérieur, leur permettant d'être aptes au refroidissement des poudres les plus fines, y compris dans la gamme allant d'environ 10 µm à 2 ou 3 mm.

Pour cela les caractéristiques essentielles de la présente invention telle que définie dans les revendications, peuvent être résumées ainsi :
a) le tunnel utilise un support vibrant, ainsi qu'au moins deux arrivées de liquide cryogénique dans le système, contrôlables indépendamment :
   i) la première projette du liquide cryogénique sur le support juste en amont du point où la poudre est déposée sur le support, réalisant ainsi un pré-refroidissement du support, assurant le fait que la poudre entre en contact avec un support très froid et qu'il n'y aura pas de phénomènes de collage du fait de différences de température, par ailleurs la chaleur de la poudre lorsque celle-ci arrive ultérieurement provoque l'évaporation du liquide cryogénique ainsi pré-déposé, le gaz froid ainsi produit étant alors une source de refroidissement supplémentaire de la poudre;
   j) la seconde est constituée par l'utilisation d'au moins un injecteur de projection (spray) de liquide cryogénique sur les poudres le long de leur trajet dans l'équipement.
b) contrairement aux équipements de l'art antérieur dans cette catégorie, le procédé selon la présente invention ne met donc pas en oeuvre de film ou bain de liquide cryogénique qui serait transporté par le support vibrant.
c) selon une première étape, on détermine la "masse thermique" de produit entrant dans l'équipement. Selon les cas, plusieurs solutions peuvent être utilisées pour accomplir cette étape : pour des produits à température sensiblement constante la masse de produit entrant par unité de temps (par exemple via un signal de la machine de production de poudre en amont, ou encore par le fait que le produit passe sur une section d'un tapis convoyeur équipée de moyens de mesure du poids, en combinaison avec la vitesse de défilement du tapis), et pour des produits dont la température varie, la détermination de la température des produits entrants (thermocouple, thermomètre infra-rouge) en combinaison avec un système de détermination du débit massique de produit entrant.
d) selon une seconde étape on synchronise la mesure de masse thermique obtenue précédemment avec la détection de l'arrivée de produit à l'entrée du système, en fonction d'un temps de réponse connu ou pré-déterminé des moyens de contrôle des arrivées de liquide cryogénique dans l'équipement.
   L'information est alors transmise au système de contrôle global de l'équipement qui est alors en mesure de rétroagir, sur la base de cette information, sur tout ou partie des paramètres régissant le fonctionnement de l'équipement (extractions, débit de l'injection de liquide cryogénique pré-refroidissant le support vibrant dans la partie amont de l'équipement, débit des projections ultérieures de liquide cryogénique sur le produit durant son parcours dans l'équipement...).
e) Selon une troisième étape, le système de contrôle global agit effectivement sur les deux types d'injecteur, qui sont alimentés au travers de vannes elles même contrôlées en fonction d'une mesure de la pression de liquide cryogénique, telle qu'obtenue par exemple par un transducteur positionné entre la vanne et les injecteurs.
   En amont des vannes, l'approvisionnement en liquide cryogénique est contrôlé par les systèmes de vannes, soupapes et autres séparateurs de phase, tout ceci permettant d'assurer que le liquide cryogénique est apporté à une pression stable et substantiellement sous la forme d'un liquide franc (faible taux de diphasique)
   Ceci permet de garantir qu'en contrôlant la pression des sprays de liquide cryogénique, on obtient des débits contrôlables et reproductibles, avec un taux de réaction pour obtenir de telles conditions ne dépassant pas quelques secondes (3 secondes est un résultat par exemple très satisfaisant). Une telle rapidité de réaction permet de garantir que l'équipement pourra réagir rapidement et efficacement à des changements de masse thermique entrante en amont.
f) selon une quatrième étape, la poudre sort de l'équipement, au travers par exemple d'un tamis, ou encore d'un mélangeur statique. La température de la poudre peut y être avantageusement mesurée et peut ainsi fournir au système de contrôle une donnée supplémentaire permettant au besoin un ajustement fin des paramètres de contrôle des injecteurs de liquide cryogénique.

La présente invention concerne alors un procédé de refroidissement d'une poudre, dans un tunnel muni d'un support vibrant, ainsi que d'au moins deux arrivées de liquide cryogénique dans le tunnel, contrôlables indépendamment :
i) la première projetant du liquide cryogénique sur le support en amont du point où la poudre est déposée sur le support ;
j) la seconde étant constituée par l'utilisation d'au moins un injecteur de projection de liquide cryogénique sur les poudres le long de leur trajet dans le tunnel ;
et comprenant les étapes suivantes :
- on détermine la masse thermique de poudre entrant dans l'équipement ;
- on effectue la détection de l'arrivée de poudre à l'entrée du tunnel ;
- on synchronise la mesure de masse thermique obtenue précédemment avec la détection de l'arrivée de poudre à l'entrée du tunnel, en fonction d'un temps de réponse connu ou pré-déterminé des moyens de contrôle desdites arrivées de liquide cryogénique dans le tunnel ;
- on transmet cette information de synchronisation à une unité d'acquisition et de traitement d'informations, qui est apte à rétroagir, le cas échéant si nécessaire, sur la base de cette information, sur tout ou partie des paramètres régissant le fonctionnement du tunnel.

Le procédé selon l'invention peut par ailleurs adopter l'un ou plusieurs des caractéristiques techniques suivantes :
- selon la teneur de ladite information, l'unité d'acquisition et de traitement d'informations rétroagit sur l'une ou l'autre ou chacune desdites arrivées de liquide cryogénique afin de garantir une température des poudres en sortie de tunnel située dans une gamme prédéterminée.
- lesdites arrivées sont alimentées au travers de vannes, et les arrivées sont contrôlées par l'unité d'acquisition et de traitement des informations par une rétroaction sur l'une ou chaque vanne en fonction d'une mesure de la pression de liquide cryogénique régnant entre la vanne et l'injecteur qui lui correspond.
- la température de la poudre est mesurée en sortie de tunnel.
- on détermine la masse thermique de poudre entrant dans l'équipement par une détermination de la masse de produit entrant par unité de temps.
- on détermine la masse thermique de poudre entrant dans l'équipement par une détermination de la température des produits entrants en combinaison avec une détermination du débit massique de poudre entrant.

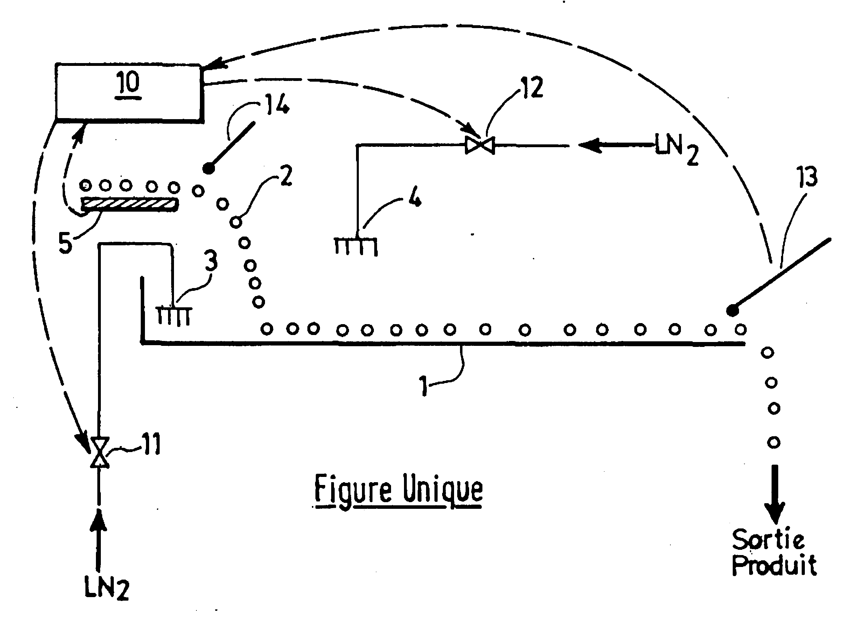

La figure unique ci-après permet de mieux visualiser un mode de réalisation de l'invention, on reconnaît sur la figure les éléments suivants :
- en 1 on a représenté de façon schématique le support vibrant du tunnel (ici en position légèrement montante mais d'autres positionnements pourront être envisagés selon le produit considérés et selon le débit entrant de produit), alimenté en poudre 2 ;
- le tunnel est muni ici de deux arrivées de liquide cryogénique contrôlables indépendamment, ici des arrivées d'azote liquide (via les vannes 11 et12):
   i) la première - 3 - projetant du liquide cryogénique sur le support en amont du point où la poudre est déposée sur le support ;
   j) la seconde - 4 étant constituée par l'utilisation d' un injecteur de projection de liquide cryogénique sur les poudres au cours de leur trajet dans le tunnel ;
- sous la référence 5 est schématisé un système de détermination de la "masse thermique" de produit entrant dans l'équipement, ici par le fait que le produit passe sur une section d'un tapis convoyeur équipée de moyens de mesure du poids, information combinée avec la vitesse de défilement du tapis ;
- sous la référence 10, on a représenté une unité d'acquisition et de traitement d'informations, apte à recevoir l'information de masse thermique de poudre entrant dans l'équipement, à recevoir l'information de détection de l'arrivée de poudre à l'entrée du tunnel (sonde 14), à synchroniser l'information de masse thermique avec la détection de l'arrivée de poudre à l'entrée du tunnel, en fonction d'un temps de réponse connu ou pré-déterminé des moyens de contrôle des arrivées de liquide cryogénique dans le tunnel, et apte à rétroagir, le cas échéant si nécessaire, sur la base de cette information, sur tout ou partie des paramètres régissant le fonctionnement du tunnel (extractions, débit de l'injection 3, débit de l'injection 4....), afin de permettre d'obtenir une température de sortie des poudres qui soit conforme à un cahier des charges donné, et notamment compris dans une gamme de température prédéterminée.
- avantageusement, l'installation est munie d'une sonde de température 13, apte à mesurer la température de la poudre en sortie de tunnel, ce qui permet de fournir à l'unité 10 une donnée supplémentaire permettant au besoin un ajustement fin des paramètres de contrôle des injecteurs de liquide cryogénique.

Selon un mode préféré de mise en oeuvre de l'invention, on utilise un fonctionnement basé sur un système de recettes, où les paramètres de contrôle du tunnel sont stockés dans l'unité de contrôle pour chaque type de produit et de situation (produit, taux de matière grasse etc....).

Ainsi une recette peut comprendre à titre illustratif :
- un réglage de la pente du support ;
- un réglage de la fréquence de vibration du support vibrant ;
- un réglage de pré-refroidissement du tunnel (mode dit « stand-by » ou « attente »), en attente d'arrivée de poudre à l'entrée du tunnel

## Revendications

1. Procédé de refroidissement d'une poudre, dans un tunnel muni d'un support vibrant, ainsi que d'au moins deux arrivées de liquide cryogénique dans le tunnel, contrôlables indépendamment :
i) la première projetant du liquide cryogénique sur le support en amont d'un point où la poudre est déposée sur le support ;
j) la seconde étant constituée par l'utilisation d'au moins un injecteur de projection de liquide cryogénique sur les poudres le long de leur trajet dans le tunnel ;
et comprenant les étapes suivantes :
- on détermine la masse thermique de poudre entrant dans le tunnel;
- on effectue la détection de l'arrivée de poudre à l'entrée du tunnel ;
- on synchronise la mesure de masse thermique obtenue précédemment avec la détection de l'arrivée de poudre à l'entrée du tunnel, en fonction d'un temps de réponse connu ou pré-déterminé des moyens de contrôle desdites arrivées de liquide cryogénique dans le tunnel ;
- on transmet cette information de synchronisation à une unité d'acquisition et de traitement d'informations, qui est apte à rétroagir, le cas échéant si nécessaire, sur la base de cette information, sur tout ou partie des paramètres régissant le fonctionnement du tunnel.

2. Procédé de refroidissement d'une poudre selon la revendication 1, **caractérisé en ce que** selon la teneur de ladite information, l'unité d'acquisition et de traitement d'informations rétroagit sur l'une ou l'autre ou chacune desdites arrivées de liquide cryogénique afin de garantir une température des poudres en sortie de tunnel située dans une gamme prédéterminée.

3. Procédé de refroidissement d'une poudre selon la revendication 2, **caractérisé en ce que** les dites arrivées sont alimentées au travers de vannes, et **en ce que** les arrivées sont contrôlées par l'unité d'acquisition et de traitement des informations par une rétroaction sur l'une ou chaque vanne en fonction d'une mesure de la pression de liquide cryogénique régnant entre la vanne et l'injecteur qui lui correspond.

4. Procédé de refroidissement d'une poudre selon l'une des revendications précédentes, **caractérisé en ce que** la température de la poudre est mesurée en sortie de tunnel.

5. Procédé de refroidissement d'une poudre selon l'une des revendications précédentes, **caractérisé en ce que** l'on détermine la masse thermique de poudre entrant dans l'équipement par une détermination de la masse de produit entrant par unité de temps.

6. Procédé de refroidissement d'une poudre selon l'une des revendications 1 à 4, **caractérisé en ce que** l'on détermine la masse thermique de poudre entrant dans l'équipement par une détermination de la température des produits entrants en combinaison avec une détermination du débit massique de poudre entrant.

## Claims

1. Method for cooling a powder, in a tunnel provided with a vibrating support, with at least two inputs of cryogenic liquid into the tunnel, independently controllable:
i)the first projecting cryogenic liquid on the support upstream of a point where the powder is deposited on the support;
j)the second consisting of the use of at least one injector for projecting cryogenic liquid on the powders along their path in the tunnel;
and comprising the following steps:
- determining the thermal mass of powder entering the tunnel;
- detecting the arrival of powder at the tunnel inlet;
- synchronizing the thermal mass measurement previously obtained with the detection of the arrival of powder at the tunnel inlet, according to a known or pre-determined response time of the means for controlling the said inputs of cryogenic liquid in the tunnel;
- transmitting this synchronization data to a data acquisition and processing unit, which is able to retroact, if necessary, on the basis of this data, on all or part of the parameters governing the operation of the tunnel.

2. Method for cooling a powder according to Claim 1, **characterized in that** according to the content of the said data, the data and acquisition processing unit retroacts on one or the other or each of the said inputs of cryogenic liquid in order to guarantee a powder temperature lying within a pre-determined range at the tunnel exit.

3. Method for cooling a powder according to Claim 2, **characterized in that** the said inputs are supplied through valves, and **in that** the inputs are controlled by the data acquisition and processing unit by a retroaction on one or each valve according to a measurement of the pressure of cryogenic liquid prevailing between the valve and the injector corresponding to it.

4. Method for cooling a powder according to one of the preceding claims, **characterized in that** the temperature of the powder is measured at the tunnel exit.

5. Method for cooling a powder according to one of the preceding claims, **characterized in that** the thermal mass of powder entering the equipment is determined by determining the mass of product entering per unit of time.

6. Method for cooling a powder according to one of Claims 1 to 4, **characterized in that** the thermal mass of powder entering the equipment is determined by determining the temperature of the entering products in combination with a determination of the mass flow rate of entering product.

## Patentansprüche

1. Verfahren zur Abkühlung eines Pulvers in einem Tunnel, der mit einer vibrierenden Auflage sowie mindestens zwei Zuleitungen für kryogene Flüssigkeit in den Tunnel versehen ist, die unabhängig voneinander steuerbar sind:
i) wobei die erste die kryogene Flüssigkeit auf die Auflage stromaufwärts eines Punkts ausspritzt, an dem das Pulver auf der Auflage abgelagert ist;
j) wobei die zweite in der Verwendung mindestens eines Injektors zum Ausspritzen kryogener Flüssigkeit auf die Pulver entlang deren Strecke in dem Tunnel besteht;
und das Verfahren die folgenden Schritte umfasst:
- Bestimmen der thermischen Masse des Pulvers, das in den Tunnel eintritt;
- Durchführung der Erfassung des Ankommens des Pulvers am Eintritt des Tunnels;
- Synchronisieren der Messung der thermischen Masse, die zuvor erhalten wurde, mit der Erfassung des Ankommens des Pulvers am Eintritt des Tunnels, in Abhängigkeit von einer bekannten oder vorherbestimmten Ansprechzeit von Mitteln zur Steuerung der Zuleitungen für kryogene Flüssigkeit in den Tunnel;
- Übermitteln dieser Synchronisationsdaten an eine Datenerfassungs- und verarbeitungseinheit, die auf Basis dieser Daten, falls erforderlich, auf alle oder einen Teil der Parameter, die den Betrieb des Tunnels regulieren, rückwirken kann.

2. Verfahren zur Abkühlung eines Pulvers nach Anspruch 1, **dadurch gekennzeichnet, dass** die Datenerfassungs- und -verarbeitungseinheit in Abhängigkeit von dem Inhalt der Daten auf eine der beiden oder jede der Zuleitungen für kryogene Flüssigkeit rückwirkt, um eine Temperatur der Pulver am Austritt des Tunnels sicherzustellen, die innerhalb eines vorherbestimmten Bereichs liegt.

3. Verfahren zur Abkühlung eines Pulvers nach Anspruch 2, **dadurch gekennzeichnet, dass** die Zuleitungen über Ventile gespeist werden und dass die Zuleitungen von der Datenerfassungs- und -verarbeitungseinheit mittels einer Rückwirkung auf ein oder jedes Ventil in Abhängigkeit von einer Messung des Drucks der kryogenen Flüssigkeit, der zwischen dem Ventil und dem diesen entsprechenden Injektor herrscht, gesteuert werden.

4. Verfahren zur Abkühlung eines Pulvers nach einem der vorhergehenden Ansprüche, **dadurch gekennzeichnet, dass** die Temperatur des Pulvers am Austritt des Tunnels gemessen wird.

5. Verfahren zur Abkühlung eines Pulvers nach einem der vorhergehenden Ansprüche, **dadurch gekennzeichnet, dass** die thermische Masse des Pulvers, das in die Vorrichtung eintritt, mittels einer Bestimmung der Masse des eintretenden Produkts pro Zeiteinheit bestimmt wird.

6. Verfahren zur Abkühlung eines Pulvers nach einem der Ansprüche 1 bis 4, **dadurch gekennzeichnet, dass** die thermische Masse des Pulvers, das in die Vorrichtung eintritt, mittels einer Bestimmung der Temperatur der eintretenden Produkte in Kombination mit einer Bestimmung des Massenstroms des eintretenden Pulvers bestimmt wird.
